# EUROPEAN PATENT APPLICATION

(11) **EP 3 062 580 A1**
(43) Date of publication of application: **31.08.2016**
(21) Application number: 16166219.2
(22) Date of filing: 03.10.2006
(51) Int. Cl.: H04W 84/04

(54) **AUTOMATIC CONFIGURATION OF PICO RADIO BASE STATION**

(30) Priority: 04.10.2005 US 722982 P; 04.10.2005 US 722983 P; 04.10.2005 US 722984 P; 06.10.2005 US 723946 P; 21.10.2005 US 728780 P; 31.10.2005 US 731495 P
(62) Divisional of application: 06799832.8
(71) Applicant: Telefonaktiebolaget LM Ericsson (publ), 164 83 Stockholm (SE)
(72) Inventor: VIKBERG, Jari, 153 38 Järna (SE); NYLANDER, Tomas, 139 34 Värmdö (SE)
(74) Representative: Hoffmann Eitle

(57) **Abstract**

Methods and apparatus configure a femto radio base station (28f). A macro receiver of the femto radio base station (28f) is used to acquire detected coverage information of a radio access network (24). The detected coverage information is used to determine an operation parameter for use by the macro transceiver (52) of the femto radio base station (28f). In one embodiment, the detected coverage information is transmitted to a control node (26) of the radio access network. The control node (26) determines the operation parameter and communicates the operation parameter to the femto radio base station (28f). The femto radio base station (28f) is accordingly configured using the operation parameter for further operation towards UES (30) accessing the femto radio base station (28f).

## Description

### BACKGROUND

### I. TECHNICAL FIELD

This invention pertains to wireless telecommunications, and particularly to operation of a "femto" or "pico" radio base station of a radio access network.

### II. RELATED ART AND OTHER CONSIDERATIONS

In a typical cellular radio system, wireless user equipment units (UEs) communicate via a radio access network (RAN) to one or more core networks. The user equipment units (UEs) can be mobile stations such as mobile telephones ("cellular" telephones) and laptops with mobile termination, and thus can be, for example, portable, pocket, hand-held, computer-included, or car-mounted mobile devices which communicate voice and/or data with radio access network. Alternatively, the wireless user equipment units can be fixed wireless devices, e.g., fixed cellular devices/terminals which are part of a wireless local loop or the like.

The radio access network (RAN) covers a geographical area which is divided into cell areas, with each cell area being served by a base station. A cell is a geographical area where radio coverage is provided by the radio base station equipment at a base station site. Each cell is identified by a unique identity, which is broadcast in the cell as part of the system information. The base stations communicate over the air interface with the user equipment units (UE) within range of the base stations. In the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks. The core network has two service domains, with an RNC having an interface to both of these domains.

One example of a radio access network is the Universal Mobile Telecommunications (UMTS) Terrestrial Radio Access Network (UTRAN). The UMTS is a third generation system which in some respects builds upon the radio access technology known as Global System for Mobile communications (GSM) developed in Europe. UTRAN is essentially a radio access network providing wideband code division multiple access (WCDMA) to user equipment units (UEs). The Third Generation Partnership Project (3GPP) has undertaken to evolve further the UTRAN and GSM-based radio access network technologies.

As those skilled in the art appreciate, in WCDMA technology a common frequency band allows simultaneous communication between a user equipment unit (UE) and plural base stations. Signals occupying the common frequency band are discriminated at the receiving station through spread spectrum CDMA waveform properties based on the use of a high speed, pseudo-noise (PN) code. These high speed PN codes are used to modulate signals transmitted from the base stations and the user equipment units (UEs). Transmitter stations using different PN codes (or a PN code offset in time) produce signals that can be separately demodulated at a receiving station. The high speed PN modulation also allows the receiving station to advantageously generate a received signal from a single transmitting station by combining several distinct propagation paths of the transmitted signal. In CDMA, therefore, a user equipment unit (UE) need not switch frequency when handover of a connection is made from one cell to another. As a result, a destination cell can support a connection to a user equipment unit (UE) at the same time the origination cell continues to service the connection. Since the user equipment unit (UE) is always communicating through at least one cell during handover, there is no disruption to the call. Hence, the term "soft handover." In contrast to hard handover, soft handover is a "make-before-break" switching operation.

Other types of telecommunications systems which encompass radio access networks include the following: Global System for Mobile communications (GSM); Advance Mobile Phone Service (AMPS) system; the Narrowband AMPS system (NAMPS); the Total Access Communications System (TACS); the Personal Digital Cellular (PDC) system; the United States Digital Cellular (USDC) system; and the code division multiple access (CDMA) system described in EIA/TIA IS-95.

There are several interfaces of interest in the UTRAN. The interface between the radio network controllers (RNCs) and the core network(s) is termed the "Iu" interface. The interface between a radio network controller (RNC) and its base stations (BSs) is termed the "Iub" interface. The interface between the user equipment unit (UE) and the base stations is known as the "air interface" or the "radio interface" or "Uu interface". In some instances, a connection involves both a Source and Serving RNC (SRNC) and a target or drift RNC (DRNC), with the SRNC controlling the connection but with one or more diversity legs of the connection being handled by the DRNC. An Inter-RNC transport link can be utilized for the transport of control and data signals between Source RNC and a Drift or Target RNC, and can be either a direct link or a logical link. An interface between radio network controllers (e.g., between a Serving RNC [SRNC] and a Drift RNC [DRNC]) is termed the "Iur" interface.

The radio network controller (RNC) controls the UTRAN. In fulfilling its control role, the RNC manages resources of the UTRAN. Such resources managed by the RNC include (among others) the downlink (DL) power transmitted by the base stations; the uplink (UL) interference perceived by the base stations; and the hardware situated at the base stations.

Those skilled in the art appreciate that, with respect to a certain RAN-UE connection, an RNC can either have the role of a serving RNC (SRNC) or the role of a drift RNC (DRNC). If an RNC is a serving RNC (SRNC), the RNC is in charge of the connection with the user equipment unit (UE), e.g., it has full control of the connection within the radio access network (RAN). A serving RNC (SRNC) is connected to the core network. On the other hand, if an RNC is a drift RNC (DRNC), it supports the serving RNC (SRNC) by supplying radio resources (within the cells controlled by the drift RNC (DRNC)) needed for a connection with the user equipment unit (UE). A system which includes the drift radio network controller (DRNC) and the base stations controlled over the Iub Interface by the drift radio network controller (DRNC) is herein referenced as a DRNC subsystem or DRNS. An RNC is said to be the Controlling RNC (CRNC) for the base stations connected to it by an Iub interface. This CRNC role is not UE specific. The CRNC is, among other things, responsible for handling radio resource management for the cells in the base stations connected to it by the Iub interface.

Some operators are investigating the possibility of providing home or small area WCDMA coverage for limited number of users using a small radio base station ("RBS"), also called a "Femto RBS" and/or a "Home RBS" and/or "pico RBS" and/or "micro RBS" in some contexts. According to such investigation, the small RBS would provide normal WCDMA coverage for the end users (e.g., to a user equipment unit (UE)), and would be connected to the RNC using some kind of IP based transmission. The coverage area so provided is called a "femto cell" (to indicate that the coverage area is relatively small). Other terminology for a femto cell includes "pico cell" or "micro cell", which is in contrast to a macro cell covered by a macro or standard radio base station (RBS).

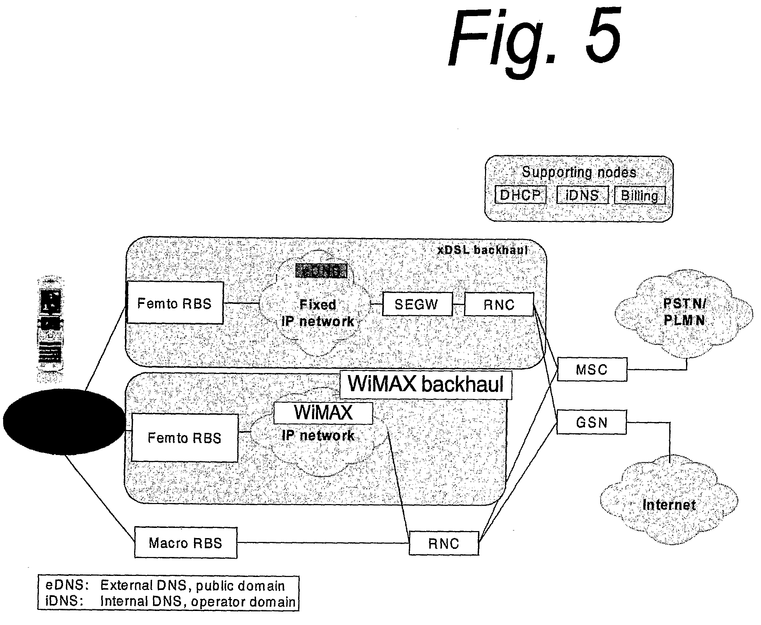

One alternative for the IP based transmission is to use Fixed Broadband access (like xDSL, Cable etc.) to connect the home RBS to the RNC. Another alternative would be to use Wireless Broadband access (e.g. HSDPA and Enhanced Uplink, or WiMAX). Fig. 5 illustrates the two different backhaul alternatives in more detail. The first alternative is labeled "xDSL Backhaul" and the second alternative is labeled "WiMAX Backhaul".

Some femto radio base station nodes comprise a macro receiver for receiving scanned cell information (e.g., system information) broadcast for one or more receivable cells of the radio access network. The macro receiver furthermore can be used to perform measurements for the receivable cells, e.g. different types of signal strength according to existing mechanisms. For example, the femto radio base station may be equipped with a WCDMA receiver which enables the femto radio base station to camp on WCDMA cells and read the relevant system information for those cells and also perform the signal strength measurements on these cells. The system information received in the receivable cells together with the signal strength measurements build up or comprise "detected coverage information". In some scenarios the detected coverage information comprises only the received system information (e.g., without the measurements).

The femto radio base station uses WCDMA towards a user equipment unit (UE) in the same way as a normal (e.g., macro) WCDMA radio base station. Research has shown that a possible best scenario is for the femto radio base station to use a different frequency in transmissions between the femto radio base station and the user equipment units served by the femto radio base station than the frequency used by the macro WCDMA coverage (e.g., for the femto radio base station to use a different frequency in relating to the user equipment units served by the femto radio base station than the frequency of the macro radio base station(s) in the overlaying macrocell). Using different frequencies in this manner creates minimal disturbance between the two radio networks (macro and femto) and also provides minimal "white spots". A white spot is a place where neither network can provide coverage because of disturbance from the other network.

Operator personnel, e.g., employees of an operator company which owns or maintains the macro RBS nodes and RNC nodes of the radio access network (RAN), typically install the macro RBS nodes. As part of the installation, the macro RBS is manually configured with IP addressing information (DNS name, Fully Qualified Domain Name, FQDN, or IP-address) of the RNC to which the macro RNC is to connect. In general, ordinary WCDMA base stations (macro RBS) are able to connect to an RNC using IP-based transmission. A considerable amount of radio network planning work is required to configure the radio network and, among other things, to select the frequency to be utilized.

By contrast, a femto RBS is typically installed by the end user rather than the network operator. The end users are also able to move the Femto RBS geographically from place to place without the operator being able or willing to control relocation of the femto RBS. Such user-directed relocation requires that, wherever the femto radio base station is installed or located, it should connect to the correct RNC. A "correct RNC" or "preferred RNC" or "appropriate RNC" in this sense would be the same RNC that is controlling the overlaying macro cell of the radio access network (RAN). Connection to the correct RNC is important since, e.g., it also improves the building of the neighboring cell lists that are needed for roaming and handover between the femto RBS and macro RBS cells. In addition, it minimizes network signaling between controller nodes.

Although independent of radio access network operator control, mobility and/or placement of a femto radio base station should take into account existing radio access network planning and configuration of the femto radio base station. It would be virtually impossible for a femto owner/operator manually to reconfigure its femto radio base station upon every relocation thereof for taking into consideration the network planning and configuration of the radio access network.

What is needed, therefore, and an object herein provided, are method, technique, apparatus, and systems for configuring a femto radio base station to use a correct WCDMA radio parameter(s) when the femto radio base station is installed or relocated.

### BRIEF SUMMARY

Methods and apparatus enable configuration of a femto radio base station. A receiver of the femto radio base station operating in a macro mode (e.g., a macro mode receiver) is used to acquire, over a radio interface, detected coverage information of a radio access network. The detected coverage information is used to determine a set of operation parameters for use by the femto radio base station. The femto radio base station is accordingly configured using the operation parameters for further operation towards user equipment units (UEs) accessing the femto radio base station.

In one example embodiment, the detected coverage information acquired by the receiver operating in the macro mode is transmitted to a control node of the radio access network (RAN) and used by the control node to determine the operation parameters for the femto radio base station. The operation parameters for the femto radio base station are communicated by the control node to the femto radio base station. The control node can be any node which bears responsibility for configuring the femto radio base station, such as a radio network controller (RNC) node or a network planning node, for example.

In another example implementation, the femto radio base station itself determines the operation parameters based on the detected coverage information (e.g., by selecting one of several sets of preconfiguration parameters).

The detected coverage information comprises the network system information received in the receivable/detected cells and (optionally) signal strength measurements performed on these cells. In one implementation, the detected coverage information sent to a control node of the radio access network (RAN) comprises a list of frequencies detected by the macro mode receiver and a signal strength measurement for each frequency of the frequency list, as well as a list of cell identifiers detected by the macro mode receiver and a signal strength measurement for each cell identifier of the cell list. In an example embodiment which the radio access network (RAN) is a WCDMA radio access network (RAN), the detected coverage information is detected WCDMA information.

In an example implementation, the operation parameter comprises one or both of frequency for use by femto transceiver(s) of the femto radio base station and output power for the respective transceiver. In another example embodiment, a scrambling code for use by the femto transceivers is provided as an additional operation parameter. Other operation parameters for the stack femto radio base station can also include Location Area Identifier (LAI) and cell identifier information.

In one of its aspects, the technology concerns a method of operating a radio access network. The method includes basic example steps of: (1) using a macro mode receiver of a femto radio base station to acquire, over a radio interface, detected coverage information of radio access network; (2) using the detected coverage information to determine a set of operation parameters for use by the femto radio base station. The method further comprises configuring the femto radio base station in accordance with the operation parameter for subsequent operation of the femto transceiver(s) towards the user equipment units (UE)s accessing this femto radio base station. In one implementation of the method, the femto radio base station itself determines the operation parameters (e.g., by selecting one of several sets of preconfiguration parameters). In another implementation, the method further comprises transmitting the detected coverage information to a control node of the radio access network and determining, at the control node of the radio access network, the operation parameters; and communicating the operation parameters from the control node to the femto radio base station for use by the femto radio base station.

Another aspect of the technology concerns a femto radio base station which comprises a resident (macro mode) radio receiver for receiving system information broadcast in a radio access network over an air interface and performing signal strength measurements to build the detected coverage information. The femto radio base station also comprises a network interface for transmitting the detected coverage information to a control node of the radio access network for obtaining an operation parameter for use by the femto radio base station and for receiving the operation parameter from the control node, as well as means for using the operation parameter for configuring the femto radio base station.

Another aspect of the technology concerns a radio access network (RAN) comprising a femto radio base station having a receiver for acquiring, over a radio interface, detected coverage information of the radio access network. The radio access network (RAN) further comprises a network planning database for storing configuration information about the configuration of the radio access network and a node for using the configuration information for determining configuration parameters for the femto radio base station. In an example implementation, the network planning database can be situated at the decision node. The radio access network (RAN) also has an interface with its interface protocol for facilitating transmission of the detected coverage information from the femto radio base station and transmission of the configuration parameters for the femto radio base station to the femto radio base station.

In an example optional variation, the femto radio base station can be configured and operated so that, even at times after start-up or activation of the femto radio base station itself, the receiver which serves as its macro mode receiver is selectively directed or activated to (again) scan or detect the surrounding network information, e.g., the detected coverage information. The selective direction or activation of the macro mode receiver to obtain the detected coverage information can be scheduled according to predetermined criteria or can be triggered by occurrence of specified (e.g., predetermined) events.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1A - Fig. 1E are diagrammatic views of an example embodiment of a telecommunications system including a radio access network, showing sequential stages of an operation of automatically configuring a femto radio base station.
Fig. 2 is a schematic view of an example embodiment of a femto radio base station.
Fig. 3 is a schematic view of an example radio network control (RNC) node.
Fig. 4 is a schematic view of another example embodiment of a femto radio base station.
Fig. 5 is a diagrammatic view showing two different backhaul alternatives.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks labeled as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware, read only memory (ROM) for storing software, random access memory (RAM), and non-volatile storage.

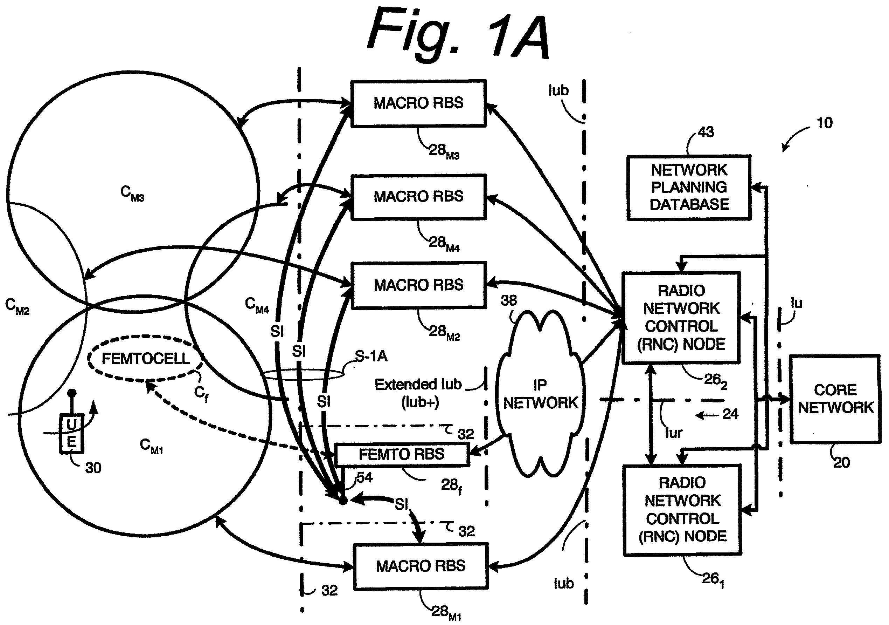

The present invention is described in the non-limiting, example context of a telecommunications system 10 shown in Fig. 1A. The telecommunications system 10 connects to a core network 20. The telecommunications system 10 comprises a radio access network 24. The radio access network 24 includes one or more radio network controller nodes (RNCs) 26 and one or more radio base stations (BS) 28. For sake of example Fig. 1A particular shows two radio network control nodes, i.e., a first radio network control 26₁ and a second radio network control 26₂. Fig. 1A illustrates, for simplification, radio base stations 28_{M1} - 28_{M4} (serving respective macrocells C_{M1} - C_{M4}) and an example femto radio base station 28_{f} (serving respective femtocell C_{f}). . The person skilled in the art understands that a radio base station is typically situated at an interior (e.g., center) of the respective cell which the radio base station serves, but for sake of clarity the macro radio base station and femto radio base stations of Fig. 1A are shown instead as being associated by double headed arrows to their respective cells. The femtocell C_{f} is geographically overlayed or overlapped by the macrocell C_{M1}.

As used herein, a "femto radio base station" also has the meaning of a pico radio base station or a micro radio base station, which serves a femto cell (or pico cell or micro cell). The femto cell is typically overlaid by one or more macro cells and serves a smaller geographic area or subscriber constituency than a macro cell. The technology described herein has particular benefit for a femto radio base station which can be installed and/or relocated within a radio access network without the installation or relocation being controlled by the owner/operator of the radio access network. In other words, a non-network operator entity (a femto owner and/or operator) can acquire the femto radio base station and situate the femto radio base station in accordance with the preferences of the femto operator. In this regard, Fig. 1A happens to show such a femto radio base station 28_{f} which has recently been activated by a femto operator or an end user. The femto radio base station 28_{f} will, upon becoming operational, have its femto cell C_{f} situated or located geographically so as to be overlaid by macrocell C_{M}. For this reason, at the time shown in Fig. 1A-D, the yet-to-be-formed femtocell C_{f} is shown in broken lines in Fig. 1A-D.

A user equipment unit (UE), such as user equipment unit (UE) 30 shown in Fig. 1A, communicates with one or more cells or one or more base stations (BS) 28 over a radio or air interface 32. The user equipment unit can be a mobile station such as a mobile telephone ("cellular" telephone) and laptop with mobile termination, and thus can be, for example, portable, pocket, hand-held, computer-included, or car-mounted mobile device which communicate voice and/or data with radio access network.

The radio access network 24 shown in Fig. 1A can be, by way of non-limiting example, a UMTS Terrestrial Radio Access Network (UTRAN). In the UTRAN, radio access is preferably based upon Wideband Code Division Multiple Access (WCDMA) with individual radio channels allocated using CDMA spreading codes. Of course, other access methods may be employed. The nodes 26 and 28 are respectively termed the radio network control node and the radio base station nodes in view of the UTRAN example. However, it should be understood that the term radio network control and radio base station also encompasses nodes having similar functionality for other types of radio access networks. Other types of telecommunications systems which encompass other types of radio access networks include the following: Global System for Mobile communications (GSM); Advance Mobile Phone Service (AMPS) system; the Narrowband AMPS system (NAMPS); the Total Access Communications System (TACS); the Personal Digital Cellular (PDC) system; the United States Digital Cellular (USDC) system; and the code division multiple access (CDMA) system described in EIA/TIA IS-95.

The radio access network 24 is connected to core network 20 over an interface, such as the Iu interface for UTRAN. The core network 20 of Fig. 1A can comprise, among other things a Mobile Switching Center (MSC) node, a Gateway MSC node (GMSC), a Gateway General Packet Radio Service (GPRS) support node (GGSN), and a General Packet Radio Service (GPRS) Service (SGSN) node. Circuit switched (CS) network or packet switched (PS) network can be connected to core network 20.

For sake of simplicity, the radio access network 24 of Fig. 1A is shown with only two RNC nodes 26. Multiple radio network controller nodes (RNCs) may be provided, with each RNC 26 being connected to one or more base stations (BS) 28. It will be appreciated that a different number of base stations than that shown in Fig. 1A can be served by a radio network control 26, and that RNCs need not serve the same number of base stations. Moreover, an RNC can be connected over an Iur interface to one or more other RNCs in radio access network 24, one instance of Iur being shown in Fig. 1A. The radio network controller node (RNC) 26 communicates over an interface Iub with the macro radio base station 28_{M}. Further, those skilled in the art will also appreciate that a base station such as the macro radio base station 28 is sometimes also referred to in the art as a radio base station, a node B, or B-node. Each of the radio interface 32, the Iu interface, the Iur interface, and the Iub interface are shown by dash-dotted lines in Fig. 1A.

Fig. 1A also shows by dash-dotted lines an "extended Iub" interface (the "Iub+" interface) which exists between the femto radio base station 28_{f} and the RNC node 26. The extended Iub+ interface is preferably formed by an internet protocol (IP) connection over an IP network 38.

Fig. 1A also shows that the radio access network 24 also comprises network planning database 43. The network planning database 43 may be provided as a separate node of radio access network 24 as shown, or may be an adjunct of another node (e.g., included in one or more radio network controller nodes (RNCs) 26). Alternatively, in certain cases, access to network planning database 43 can even be provided through core network 20. The network planning database 43 includes information about the configuration of radio access network 24, including (for example) information about the location and parameters of the radio base stations which populate the radio access network, such parameters including the frequency(ies) and scrambling codes at which the various radio base stations operate.

Fig. 1A can be viewed as illustrating generic access of femto radio base station 28_{f} to the radio access network (RAN), e.g., to its radio network controller node (e.g., radio network controller node 26₁ in the specifically illustrated scenario). By "generic access" is meant that the access afforded to femto radio base station 28_{f} can be either broadband fixed access or broadband wireless (mobile) access (e.g., WiMAX) as described above. In broadband wireless (mobile) access, access for femto radio base station 28_{f} to the radio access network 24 is through a macro radio base station, and can occur using, e.g. High Speed Downlink Packet Access (HSDPA) and Enhanced Uplink; or WiMAX. To cater generically to the access types, in Fig. 1A the femto radio base stations 28_{f} including femto radio base stations 28_{fj} are connected to a communications network 38. An example of such communications network is an IP network 38. Unless otherwise specifically exempted in its context, aspects of the technology described herein are applicable to all types of access, including broadband fixed access and broadband mobile access (e.g., broadband wireless access).

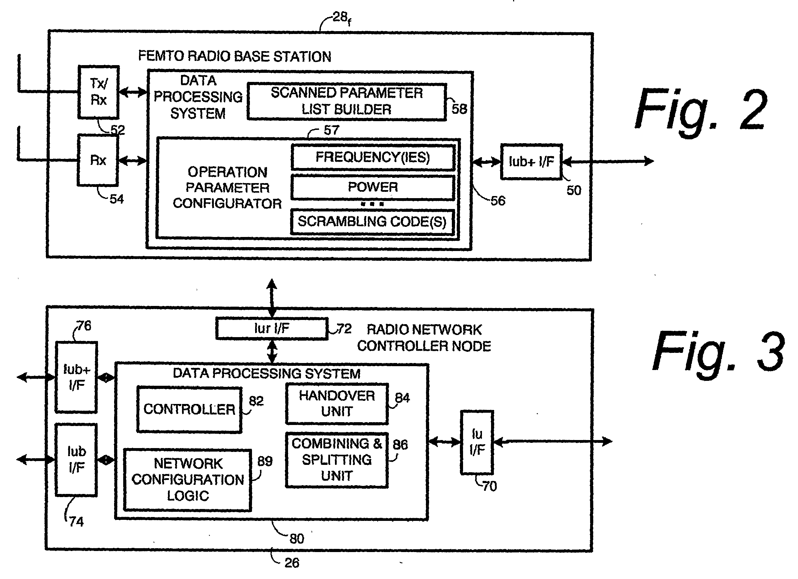

Fig. 2 illustrates basic, selected, representative constituent elements of an example generic femto radio base station 28_{f}. The femto radio base station 28_{f} of Fig. 2 is shown as including, among its other unillustrated constituent units, an IP interface unit 50; one or more radio frequency transceivers 52, a radio frequency receiver 54; and, a data processing system, section, or unit 56. The IP interface unit 50 is, in many respects, a normal Iub interface unit, but has connectivity to IP network 38 as well as some extensions to the Iub protocol in order to carry information (such as that described herein) needed for automatic configuration of the femto radio base station, e.g., information indicative of certain scanning results and operation parameter(s) to be downloaded from a radio network controller. The connection between RNC 26 and the femto radio base stations 28_{f} utilizes, e.g., Internet Protocol (IP)-based transmission. Alternatively, rather than the Iub+ interface, a new interface/protocol can be utilized between the femto radio base station and a node of the radio access network (e.g., a radio network controller (RNC) node or a network planning node) which accommodates the communications herein described.

The radio frequency transceivers 52 are for communicating over the radio or air interface with user equipment units (UEs) in the femtocell served by the femto radio base station 28_{f}, and accordingly are referred to herein as "femto transceivers". The number of femto transceivers 52 depends on various factors including capacity of the femto radio base station to handle mobile connections.

In the illustrated embodiment, macro mode receiver 54 is resident at femto radio base station 28_{f} and serves for acquiring, at a femto radio base station and over a radio interface, the detected coverage information in the radio access network 24. In view of the fact that receiver 54 serves, in at least part of its operation, to acquire the detected coverage information in the macro radio access network 24, receiver 54 is sometimes referred to herein as a "macro mode receiver". In one example embodiment, the receiver 54 can be dedicated to communications with radio access network 24 (e.g., obtaining the detected coverage information from macro radio base station(s)), and thus essentially always operates in a macro mode. Yet in other example embodiments, the receiver 54 can selectively operate in the macro mode (e.g., for obtaining the detected coverage information from macro radio base station(s)) or in a femto mode (e.g., can function as one of the femto receivers 52 when not serving for macro reception). Indeed, the receiver 54 can be one of the femto receivers 52 which is selectively operable in the macro mode to obtaining the detected coverage information from macro radio base station(s), and as such becomes the macro mode receiver. In terms of the implementation of receiver 54, in one example implementation the femto radio base station 28_{f} comprises or is equipped with a WCDMA receiver (a UE) as its receiver 54, thereby enabling the femto radio base station to camp on signals from receivable cells (including both WCDMA macrocells and femtocells) and to read the relevant system or network information broadcast in those cells.

The RBS data processing system 56 of femto the radio base station includes an operation parameter configurator 57 and scanned parameter list builder 58. The operation parameter configurator 57 and scanned parameter list builder 58 can be included as part of RBS data processing system 56 as shown, or provided as a distinct controller or processor, in the broad sense of those terms as previously mentioned. Moreover, scanned parameter list builder 58 and operation parameter configurator 57 need not be provided as part of the same unit, functionality, controller, or processor.

Fig. 3 illustrates basic, selected, representative constituent elements of an example radio network control node 26. The radio network control node 26 can comprise several interface units, such as an interface unit 70 for connecting radio network control node 26 over the Iu interface to core network 20; an interface unit 72 for connecting radio network control node 26 over the Iur interface to other (unillustrated) radio network controllers; one or more interface units 74 for connecting radio network control node 26 over the Iub interface to respective one or more macro radio base stations 28_{M}; and, one or more interface units 76 for connecting radio network control node 26 over the Extended Iub ("Iub+) interface to respective one or more femto radio base stations such as femto radio base station 28_{f}. The connection between RNC 26 and the femto radio base stations can utilize, e.g., Internet Protocol (IP)-based transmission. The connection between RNC 26 and the macro radio base station(s) 28_{M} can utilize, e.g., Internet Protocol (IP)-based and/or ATM-based transmission.

In addition to interface units, the radio network control node 26 comprises numerous unillustrated constituent units, as well as a data processing system, section, or unit 80. As shown in Fig. 3, in an example, non-limiting implementation the data processing system 80 of radio network control node 26 comprises a control section (e.g., controller 82); a handover unit 84; and, a combiner and splitter unit 86 (involved, e.g., in handling diversity legs of a connection). Further, radio network controller node 26 comprises network configuration logic 89 which communicates with network planning database 43 for determining, e.g., operation parameters for use by macro mode receiver 54femto radio base station 28_{f} such as operation parameters for its femto transceivers 52.

At the time shown in Fig. 1A, femto radio base station 28_{f} has been just been powered up and activated by a femto operator or an end user. Among the activities pursued by femto radio base station 28_{f} upon activation is connection to a correct radio network controller node (e.g., radio network controller 26₂ in the situation shown in Fig. 1A). The femto radio base station 28_{f} can become connected to is correct radio network controller node in various ways.

Another activity pursued by femto radio base station 28_{f} is determining its proper operating parameters, including operation parameters for its femto transceiver(s) 52. In this regard, and as shown by event or step S-1A in Fig. 1A, after activation macro mode receiver 54 scans the surrounding coverage to find out the system information of the surrounding radio access network, e.g., the detected coverage information (e.g., what frequencies and cells are being used in the surrounding WCDMA network. The other frequencies can be from macro radio base stations and other femto radio base stations.). The arrows of Fig. 1A which are labeled "SI" depict the obtaining or acquiring of system information, and collectively represent a step or event S-1A. In the particular example shown in Fig. 1A, in the process of the network scan the receiver 54 of femto radio base station 28_{f} is gathering system information from each of four proximate macrocells, e.g., macrocell C_{M1} - macrocell C_{M4}. The scan is performed over the air or radio interface 32.

As a result of the scan of its macro mode receiver 54, the scanned parameter list builder 58 builds one or more lists of system information gathered from the surrounding environment during the scan. In one implementation, the system information comprises frequencies of detected by the macro mode receiver 54 and cell identifiers detected by the macro mode receiver 54. Consequently, in such implementation, the scanned parameter list builder 58 builds both a list of frequencies (Femto_RBS_Detected_Frequencies) detected by the macro mode receiver 54 (and a signal strength measurement for each frequency of the frequency list) and a list of cell identifiers (Femto_RBS_Detected_Cells) detected by the macro receiver (and a signal strength measurement for each cell identifier of the cell list). For each list, a signal strength measurement is made in a similar way as a user equipment unit (UE) measures the neighboring cells in the WCDMA network ordinarily. These signal strength measurements and other relevant WCDMA radio information is added to the lists built by scanned parameter list builder 58. Such other relevant information can include, for example, Location Area Information (LAI), including PLMN, and scrambling codes.

After the detected coverage information is built by scanned parameter list builder 58, femto radio base station 28_{f} transmits the detected coverage information to a control node of the radio access network. The transmission of the detected coverage information is preferably performed after femto radio base station 28_{f} has connected to the correct node that is configuring the femto radio base station 28_{f} In the example above described, both the Femto_RBS_Detected_Frequcncies list and the Femto_RBS_Detected_Cells list are provided/reported to the radio network control node (e.g., to radio network controller node 26₂ in the illustrated scenario). Alternatively, if another node of the radio access network, such as a network planning node, is responsible for participating in the configuring of femto radio base station 28_{f}, the lists are provided/reported to that other node.

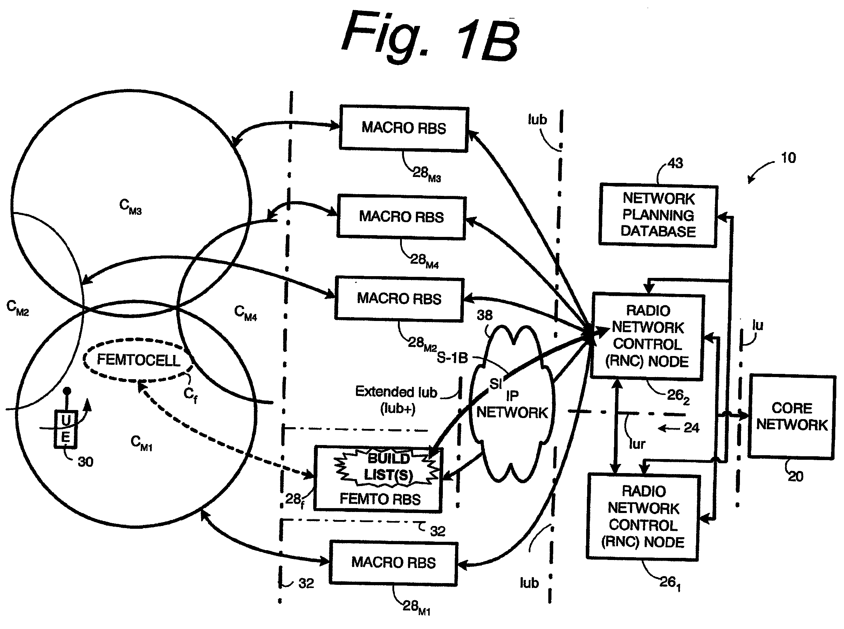

In the example scenario thus far described, step or event S-1B of Fig. 1B depicts both the scanned parameter list builder 58 building the detected coverage information and transmission of the detected coverage information over the Iub+ interface to radio network controller node 26₂.

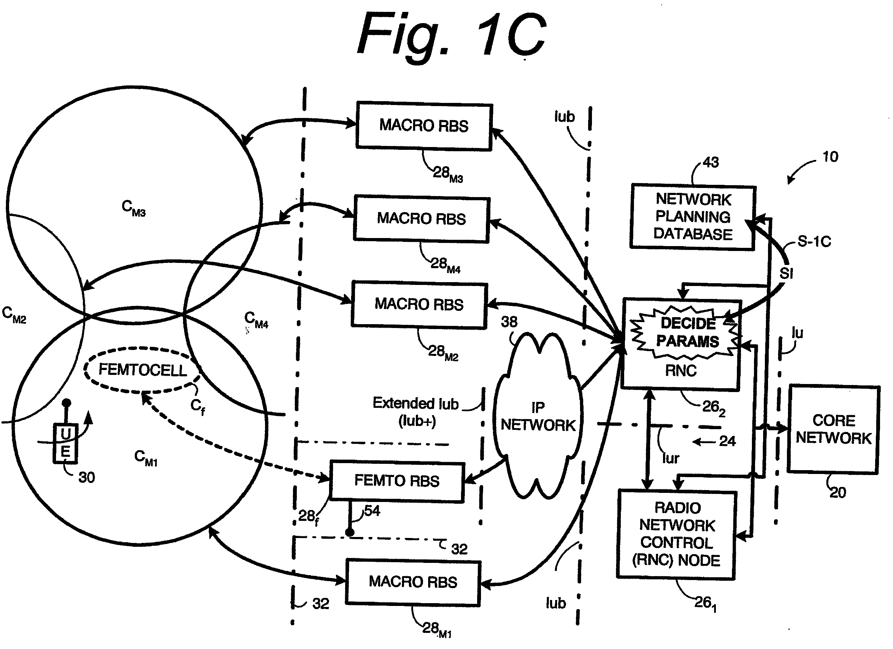

Fig. 1C depicts, as step or event S-1C, the radio network controller node, (having received the detected coverage information from femto radio base station 28_{f} as step S-1B) determining one or more operation parameter(s) for use by femto radio base station 28_{f} for the current location of femto radio base station 28_{f}. In this regard, the network configuration logic 89 of the control node can, in conjunction with its determination, consult network planning database 43, e.g., to obtain relevant information about network topography or operation (particularly concerning radio base stations). The operation parameters selected for femto radio base station 28_{f} depend on the "heard" WCDMA environment surrounding the current location of femto radio base station 28_{f}, including both macro cells emanating from macro radio base stations and femto cells emanating from other femto radio base stations As mentioned previously, in some implementations in which network planning database 43 itself has network planning or configuration logic, the control node may delegate or defer the entire decision/selection of operating parameters for femto radio base station 28_{f} to network planning database 43 (in which case network planning database 43 also becomes a "control" node).

In an example implementation, the operation parameter determined or selected by the control node as step S-1C comprises one or both of frequency for use by the femto transceiver(s) 52 and output power for the femto transceiver(s) 52. In another example embodiment, a scrambling code for the femto transceiver(s) 52 is provided as an additional operation parameter. As an example, if five scrambling codes are allocated to the femto layer, the network configuration logic 89 should select for femto radio base station 28_{f} a scrambling code that was not included in the detected coverage information. As another example, if two frequencies are used, and both heard, the frequency with the weakest signal should be selected by network configuration logic 89 for femto radio base station 28_{f}.

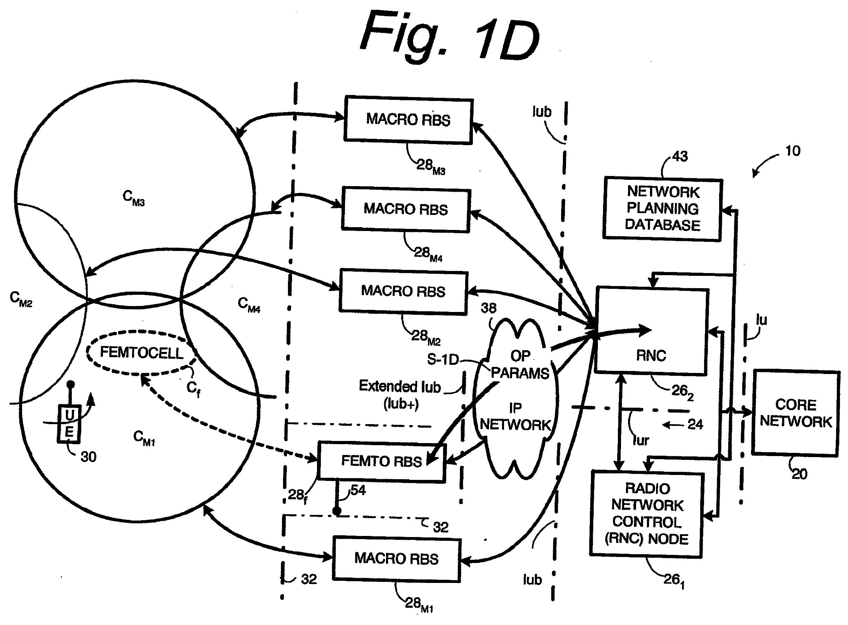

Fig. 1D illustrates, as step or event S-1D, the control node communicating the operation parameter(s) (for use by femto radio base station 28_{f} at its current location) to femto radio base station 28_{f}. The operation parameter(s) include which frequency the femto transceiver(s) 52 should use in the current location of femto radio base station 28_{f} and (optionally) other WCDMA radio parameters for use by femto radio base station 28_{f}, e.g., power and scrambling code. The communication of the operation parameter(s) occurs over the Iub+ interface.

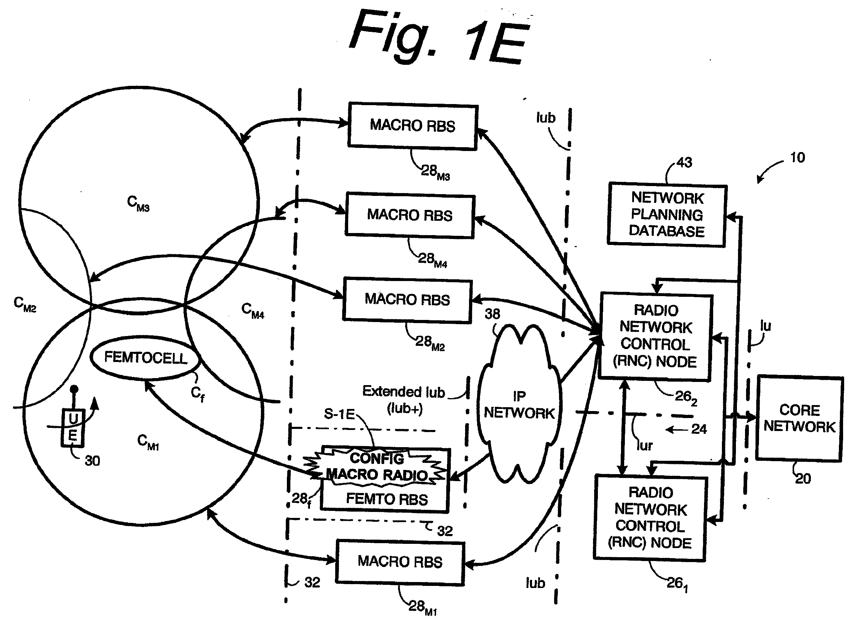

Fig. 1E depicts, as step or event S-1E, the femto radio base station 28_{f} (and particularly operation parameter configurator 57 of femto radio base station 28_{f}) configuring itself in accordance with the operation parameter(s) (as determined by the control node) for subsequent operation of femto radio base station 28_{f} toward the UEs accessing this femto radio base station. For sake of illustration, Fig. 2 shows operation parameter configurator 57 of femto radio base station 28_{f} as comprising a functionality for setting the frequency(ies) for the femto transceiver(s) 52, a functionality for setting power for the femto transceiver(s) 52, and a functionality for setting the scrambling codes for the femto transceiver(s) 52 of femto radio base station 28_{f}. These functionalities are shown for sake of example, it being understood that not all the illustrated functionalities need be present or utilized, and that other functionalities can alternatively or additionally be provided (e.g., Location Area Identifier (LAI) and cell identity, for example).

Having been thusly automatically configured, femto radio base station 28_{f} starts using the received operation parameters (also considered configuration information) and activates the femto transceiver(s) 52 to provide coverage for all user equipment units (UEs) accessing femto radio base station 28_{f}. Thus, Fig. 1E shows with solid lines the appearance in the radio access network (RAN) of femtocell C_{f} established with respect to femto radio base station 28_{f}.

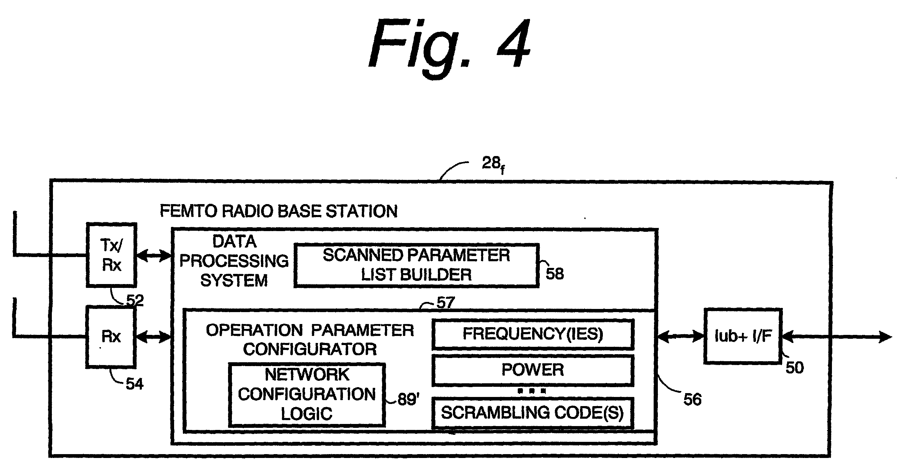

In an example implementation, the received configuration, e.g., the operating parameters, includes at least the frequency, scrambling code and output power to be used for the femto transceiver(s) 52. In a simplified alternative embodiment illustrated in Fig. 4, a femto radio base station is configured with allowed frequencies and configurations prior to release (e.g., sale) and installation. That is, the femto radio base station can have a number of predefined configurations, and then subsequently the femto radio base station selects the most proper configuration. In this simplified alternative, the network configuration logic (such as network configuration logic 89 of RNC 26 as shown in Fig. 3) or a form thereof is incorporated in femto radio base station 28_{f} in the example manner of network configuration logic 89' shown in Fig. 4. In the Fig. 4 embodiment, the femto radio base station performs the scanning as defined above, but instead of reporting the detected coverage information to a control node, the femto radio base station autonomously selects the configuration depending on the detected coverage information. Then the femto radio base station uses the selected configuration as if it were received from the control node, in similar manner as described above. Thus, as described above, the technology facilitates automated configuration of femto radio base station, with the optimal configuration in any geographical or network location.

In an example optional variation, the femto radio base station 28_{f} can be configured and operated so that, even at times after start-up or activation of the femto radio base station 28_{f} itself, the receiver which serves as its macro mode receiver 54 is selectively directed or activated to (again) scan or detect the surrounding network information, e.g., the detected coverage information. The selective direction or activation of the macro mode receiver 54 to obtain the detected coverage information can be scheduled according to predetermined criteria or can be triggered by occurrence of specified (e.g., predetermined) events.

For example, in terms of scheduling, the femto radio base station 28_{f} can be configured and operated so that macro mode receiver 54 "wakes up" at regular intervals (e.g., during a specific time period of the night) and so that other transceivers are temporarily shut down, thereby enabling macro mode receiver 54 to scan and obtain the detected coverage information (e.g., WCDMA coverage information in the case of a WCDMA radio access network (RAN)).

In terms of the macro mode receiver 54 being triggered by occurrence of specified (e.g., predetermined) events, such events can be (for example) on a report of an unknown detected cell(s) or be based on statistics. For example, a user equipment unit reporting an unknown detected cell (upon measurement triggered by an RNC) could indicate that a new femto radio base station has been installed in the neighborhood. When the unknown cell is reported to the RNC, the RNC can order the femto radio base station, and particularly macro mode receiver 54, to perform a scanning. Alternatively or additionally, activation of macro mode receiver 54 for scanning purposes can be dependent upon or driven statistically. For example, statistics such as dropped calls, failed handovers, and the like may prompt the selective activation of macro mode receiver 54. If not available at the femto radio base station, the statistics can be maintained at and selective activation of macro mode receiver 54 ordered by another node, such as an radio network controller node.

Selective reactivation or operation of macro mode receiver 54 in the foregoing and similar manners enables femto radio base station 28_{f} to check to determine if the network coverage has changed, e.g., whether there has been any change in cell planning or if other cells (e.g., other femto cells) have been installed in the neighborhood.

As mentioned previously, the foregoing principle/method can also be applied for radio technologies other than WCDMA, which is illustrated only as an example. Other suitable technologies include but are not limited to GSM, CDMA, WiMAX etc. The technology has particular relevance of the aforementioned and conveniently described system and scenarios, but could also be applied in other cases and for other networks.

Although various embodiments have been shown and described in detail, the claims are not limited to any particular embodiment or example. None of the above description should be read as implying that any particular element, step, range, or function is essential. The invention is not to be limited to the disclosed embodiment, but on the contrary, is intended to cover various modifications and equivalent arrangements.

Further embodiments of the invention are as follows:
E1: A method of operating a radio access network characterized by: using a receiver of a femto radio base station to acquire, over a radio interface, detected coverage information of a radio access network; determining an operation parameter for use by the femto radio base station; and, configuring the femto radio base station in accordance with the operation parameter for subsequent operation.
E2: The method of E1, further comprising using the receiver at periodic intervals or upon occurrence of predetermined events to acquire the detected coverage information.
E3: The method of E1, further comprising transmitting the detected coverage information to a control node of the radio access network; determining, at the control node of the radio access network, the operation parameter for use by the femto radio base station; and communicating the operation parameter for use by the femto radio base station to the femto radio base station.
E4: The method of E1, further comprising using the detected coverage information for selecting between plural sets of stored operation parameters preconfigured at the femto radio base station for use as operation parameters for use by the femto radio base station at its current location.
E5: The method of E1, further comprising configuring femto transceivers of the femto radio base station in accordance with the operation parameter for subsequent operation toward user equipment units accessing the femto radio base station.
E6: The method of E1, wherein the detected coverage information comprises a list of frequencies of detected by the receiver and a signal strength measurement for each frequency of the frequency list.
E7: The method of E1, wherein the detected coverage information comprises a list of cell identifiers detected by the receiver and a signal strength measurement for each cell identifier of the cell list.
E8: The method of E1, wherein the operation parameter comprises a frequency for use by a femto transceiver of the femto radio base station at the current location of the femto radio base station.
E9: The method of E1, wherein the operation parameter comprises one or both of frequency for use by a femto transceiver of the femto radio base station and output power for the femto transceiver.
E10: The method of E1, wherein the operation parameter comprises at least one of scrambling code for use by the femto transceiver, cell identifier for a femto cell corresponding to the femto radio base station, and Location Area Identity for the femto cell.
E11: A femto radio base station characterized by: a radio receiver for receiving, over an air interface, detected coverage information of a radio access network; means for using the detected coverage information for determining an operation parameter for use by the femto radio base station; and, means for using the operation parameter for configuring the femto radio base station.
E12: The apparatus of E11, wherein the receiver is configured to be activated at periodic intervals or upon occurrence of predetermined events for receiving the detected coverage information.
E13: The apparatus of E11, further comprising a network interface for transmitting the detected coverage information to a control node of the radio access network for obtaining an operation parameter for use by the femto radio base station and for receiving the operation parameter from the control node.
E14: The apparatus of E11, wherein the network interface is an Internet Protocol (IP) interface.
E15: The apparatus of E11, wherein the femto radio base station comprises plural sets of stored operation parameters preconfigured at the femto radio base station, and wherein the means for using the detected coverage information for determining the operation parameter selects one of the sets of stored operation parameters for use by the femto radio base station at its current location.
E16: The apparatus of E11, wherein the operation parameter comprises a frequency for use by a femto transceiver of the femto radio base station at the current location of the femto radio base station.
E17: The apparatus of E11, wherein the operation parameter comprises one or both of frequency for use by a femto transceiver of the femto radio base station and output power for the femto receiver.
E18: The apparatus of E11, wherein the operation parameter comprises at least one of scrambling code for use by the femto transceiver, cell identifier for a femto cell corresponding to the femto radio base station, and Location Area Identity for the femto cell.
E19: The apparatus of E11, wherein the detected coverage information comprises a list of frequencies as detected by the receiver and a signal strength measurement for each frequency of the list.
E20: The apparatus of E11, wherein the detected coverage information comprises a list of cell identifiers detected by the receiver and a signal strength measurement for each cell identifier of the list.
E21: A radio access network characterized by: a femto radio base station, the femto radio base station comprising a receiver for acquiring, over a radio interface, detected coverage information of the radio access network; a network planning database for storing configuration information about the configuration of the radio access network; a node for using the configuration information for determining configuration parameters for the femto radio base station; an interface (50) having an interface protocol for facilitating transmission of the detected coverage information from the femto radio base station and transmission of the configuration parameters for the femto radio base station to the femto radio base station.
E22: The apparatus of E21, wherein the configuration information includes information about location and parameters of radio base stations which populate the radio access network.
E23: The apparatus of E21, wherein the parameters include frequency(ies) and scrambling code(s) at which the radio base stations operate.

## Claims

1. A method of operating a radio access network (24) **characterized by** a femto radio base station (28_{f}) performing the steps of:
using a receiver (54) of the femto radio base station (28_{f}) to acquire, over a radio interface, detected coverage information of a radio access network (24);
providing at least a portion of the detected coverage information to a network node;
obtaining from the network node operation parameters for use by the femto radio base station (28_{f}); and,
configuring the femto radio base station (28_{f}) in accordance with the operation parameters for subsequent operation.

2. The method of claim 1, further comprising using the receiver (54) at periodic intervals or upon occurrence of predetermined events to acquire the detected coverage information.

3. The method of claim 1, further comprising configuring femto transceivers (52) of the femto radio base station (28_{f}) in accordance with the operation parameters for subsequent operation toward user equipment units (30) accessing the femto radio base station (28_{f}).

4. The method of claim 1, wherein the detected coverage information comprises a list of frequencies detected by the receiver (54) and a signal strength measurement for each frequency of the frequency list.

5. The method of claim 1, wherein the detected coverage information comprises a list of cell identifiers detected by the receiver (54) and a signal strength measurement for each cell identifier of the cell list.

6. The method of claim 1, wherein the operation parameters comprise a frequency for use by a femto transceiver (52) of the femto radio base station (28_{f}) at the current location of the femto radio base station (28_{f}).

7. The method of claim 1, wherein the operation parameters comprise one or both of frequency for use by a femto transceiver (52) of the femto radio base station (28_{f}) and output power for the femto transceiver (52).

8. The method of claim 1, wherein the operation parameters comprise at least one of scrambling code for use by the femto transceiver (52), cell identifier for a femto cell corresponding to the femto radio base station (28_{f}), and Location Area Identity for the femto cell.

9. A femto radio base station (28_{f}) **characterized by**:
a radio receiver (54) for receiving, over an air interface (32), detected coverage information of a radio access network (24);
means for providing at least a portion of the detected coverage information to a network node;
means for obtaining from the network node the operation parameters for use by the femto radio base station (28_{f}) ; and,
means for using the operation parameters for configuring the femto radio base station (28_{f}).

10. The apparatus of claim 9, wherein the receiver (54) is configured to be activated at periodic intervals or upon occurrence of predetermined events for receiving the detected coverage information.

11. The apparatus of claim 9, wherein the operation parameters comprise a frequency for use by a femto transceiver (52) of the femto radio base station (28_{f}) at the current location of the femto radio base station (28_{f}).

12. The apparatus of claim 9, wherein the operation parameters comprise one or both of frequency for use by a femto transceiver (52) of the femto radio base station (28_{f}) and output power for the femto receiver (28_{f}).

13. The apparatus of claim 9, wherein the operation parameters comprise at least one of scrambling code for use by the femto transceiver (52), cell identifier for a femto cell corresponding to the femto radio base station (28_{f}), and Location Area Identity for the femto cell.

14. The apparatus of claim 9, wherein the detected coverage information comprises a list of frequencies as detected by the receiver (54) and a signal strength measurement for each frequency of the list.

15. The apparatus of claim 9, wherein the detected coverage information comprises a list of cell identifiers detected by the receiver (54) and a signal strength measurement for each cell identifier of the list.
